# EUROPEAN PATENT APPLICATION

(11) **EP 3 024 248 A1**
(43) Date of publication of application: **25.05.2016**
(21) Application number: 15194632.4
(22) Date of filing: 13.11.2015
(51) Int. Cl.: H04N 21/81, H04N 21/8405, H04N 21/439, H04N 21/4722, H04N 21/431, H04N 21/462, H04N 21/44

(54) **BROADCASTING RECEIVING APPARATUS AND CONTROL METHOD THEREOF**

(30) Priority: 18.11.2014 KR 20140160674
(71) Applicant: Samsung Electronics Co., Ltd., Gyeonggi-do 16677 (KR)
(72) Inventor: RYU, Young-jun, Gyeonggi-do (KR); SHIN, Yong-wook, Gyeonggi-do (KR); SHIN, Seung-min, Seoul (KR); LEE, Yong-hoon, Gyeonggi-do (KR)
(74) Representative: Hewett, Jonathan Michael Richard

(57) **Abstract**

A broadcasting receiving apparatus includes a receiving unit configured to receive content of a genre selected by a user; a signal processing unit configured to perform signal processing on the received content; an output unit configured to output the content on which signal processing is performed; and a processor configured to analyze an audio signal included in the content on which signal processing is performed, extract keywords, generate additional information corresponding to a content output scene based on the extracted keywords, and simultaneously output the additional information and the content on which signal processing is performed.

## Description

The present invention relates to a broadcasting receiving apparatus and a control method thereof, and more particularly, to a broadcasting receiving apparatus that provides additional information for content that is being reproduced, and a control method thereof.

Due to development of electronic technology, diverse types of electronic devices have been developed and propagated. In particular, a broadcasting receiving apparatus, such as a TV, that is one of home appliances that are most frequently used at home has been rapidly developed for recent years.

Owing to high quality performance of the broadcasting receiving apparatus, the broadcasting receiving apparatus not only reproduces contents but also provides various types of additional information related to the contents.

However, such information has a lot of omitted information and has a limited range of utilizing external information providers according to countries and regions. Thus, there is a problem that it is difficult to confirm content information or provide application services of corresponding information.

Additional aspects and/or advantages will be set forth in part in the description which follows and, in part, will be apparent from the description, or may be learned by practice of the embodiments of the present invention.

The embodiments provide a broadcasting receiving apparatus that generates and provides additional information based on an audio signal included in contents, and a control method thereof.

According to an aspect of the present invention, a broadcasting receiving apparatus includes: a receiving unit configured to receive content of a genre selected by a user; a signal processing unit configured to perform signal processing on the received content; an output unit configured to output the content on which signal processing is performed; and a processor configured to analyze an audio signal included in the content on which signal processing is performed, extract keywords, generate additional information corresponding to a content output scene based on the extracted keywords, and simultaneously output the additional information and the content on which signal processing is performed.

The broadcasting receiving apparatus may further include: a storage unit configured to store a reference keyword list in which the keywords are classified and listed according to a preset standard, wherein the processor extracts the keywords from the audio signal based on the reference keyword list.

The processor may convert voice included in the audio signal into text and extract the keywords from the converted text.

The processor may extract the keywords from the converted text, reconfigure the extracted keywords, and autonomously generate the additional information based on the reconfigured keywords.

The processor may control the generated additional information to be output in an OSD (On Screed Display) form according to a preset event.

The preset event may be at least one of an information request event of a user and an event in which a scene related to the generated additional information is output.

The processor may select and output sports information corresponding to current state information from among the generated sports information.

When the content and the additional information are simultaneously received, the processor may generate the additional information based on the extracted keywords and the received additional information.

The content of the genre may be content related to sports, and the additional information may be sports information.

The sports information may include at least one of a sports item, a league name, a team name, and a player name.

According to another aspect of the present invention, a control method of a broadcasting receiving apparatus includes receiving content of a genre selected by a user, performing signal processing on the received content; analyzing an audio signal included in the content on which signal processing is performed, extracting keywords, and autonomously generating additional information corresponding to a content output scene based on the extracted keywords; and simultaneously outputting the generated additional information and the content on which signal processing is performed.

The generating of the additional information may include: extracting the keywords from the audio signal based on a previously stored reference keyword list in which the keywords are classified and listed according to a preset standard.

The generating of the additional information may include: converting voice included in the audio signal into text and extracting the keywords from the converted text.

The generating of the additional information may include: extracting the keywords from the converted text, reconfiguring the extracted keywords, and then autonomously generating the additional information based on the reconfigured keywords.

The outputting may include: outputting the generated additional information in an OSD form according to a preset event.

The preset event may be at least one of an information request event of a user and an event in which a scene related to the generated additional information is output.

The outputting may include: selecting and outputting sports information corresponding to current state information from among the generated sports information.

The generating of the additional information may include, when the content and the additional information are simultaneously received, generating the additional information based on the extracted keywords and the received additional information.

The content of the genre may be content related to sports, and the additional information may be sports information.

The sports information may include at least one of a sports item, a league name, a team name, and a player name.

According to another aspect of the present invention, a method includes receiving content of a genre, analyzing audio of the content to extract keywords, obtaining additional information related to the genre using the keywords, and displaying the additional information with the content.

The obtaining additional information may include classifying the keywords using a classification model and selecting the additional information from stored genre information responsive to the classifying.

Additional and/or other aspects and advantages of the embodiments will be set forth in part in the description which follows and, in part, will be obvious from the description, or may be learned by practice of the embodiments.

The above and/or other aspects of the embodiments will be more apparent by describing certain exemplary embodiments with reference to the accompanying drawings, in which:
FIG. 1 is a block diagram of a configuration of a display apparatus according to an exemplary embodiment;
FIG. 2 is a block diagram of a configuration of a display apparatus according to another exemplary embodiment;
FIG. 3 is a diagram for describing a case where a display apparatus is implemented as a digital TV according to an exemplary embodiment;
FIGS. 4, 5, 6A, and 6B are diagrams for describing a method of generating sports information according to an exemplary embodiment;
FIGS. 7 and 8 are diagrams for describing a method of outputting generated sports information according to an exemplary embodiment; and
FIG. 9 is a flowchart of a control method of a display apparatus according to an exemplary embodiment.

Reference will now be made in detail to the embodiments, examples of which are illustrated in the accompanying drawings, wherein like reference numerals refer to the like elements throughout. The embodiments are described below by referring to the figures.

The exemplary embodiments of the present invention may be diversely modified. Accordingly, specific exemplary embodiments are illustrated in the drawings and are described in detail in the detailed description. However, it is to be understood that the present invention is not limited to a specific exemplary embodiment, but includes all modifications, equivalents, and substitutions without departing from the scope of the present invention. Also, well-known functions or constructions are not described in detail since they would obscure the disclosure with unnecessary detail.

The terms "first", "second", etc. may be used to describe diverse components, but the components are not limited by the terms. The terms are only used to distinguish one component from the others.

The terms used in the present application are only used to describe the exemplary embodiments, but are not intended to limit the scope of the invention. The singular expression also includes the plural meaning as long as it does not differently mean in the context. In the present application, the terms "include" and "consist of' designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the present invention, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

Hereinafter, the present invention will be described in detail with reference to the accompanying drawings.

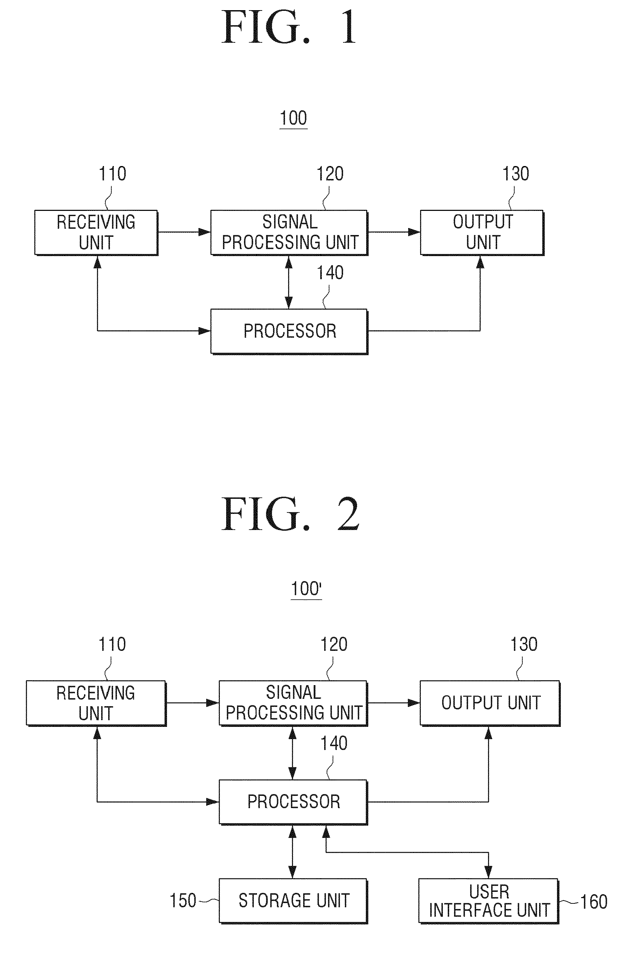

FIG. 1 is a block diagram of a configuration of a display apparatus 100 according to an exemplary embodiment. The display apparatus 100 of FIG. 1 may be implemented as various types of apparatuses capable of reproducing content and including a display function, such as a digital TV, a PC, a notebook PC, a smart phone, a tablet, a PDA, etc. In particular, the display apparatus 100 may be implemented as a broadcasting receiving apparatus capable of receiving broadcasting. It will be described below on the assumption that the display apparatus 100 is implemented as the broadcasting receiving apparatus.

Referring to FIG. 1, the broadcasting receiving apparatus 100 may include a receiving unit 110, a signal processing unit 120, an output unit 130, and a processor 140.

The receiving unit no may receive content of a preset genre. In this regard, the content of the preset genre may be content related to sports but is not limited thereto. The content of the present genre may be various types of content required to provide additional information related to content such as content related to games, content related to various contests, etc. In this regard, the preset genre may be initially set as default by a user or may be automatically set through a channel or source selection of the user.

Meanwhile, the receiving unit 110 may be implemented as a tuner that receives broadcasting content but is not limited thereto. The receiving unit 110 may be implemented as various types of communication modules capable of receiving various types of outside content such as a WiFi module, a USB module, a HDMI module, etc.

The signal processing unit 120 may perform signal processing on the received content.

In more detail, the signal processing unit 120 may separate a signal corresponding to the received content into an audio signal and a video signal and decode the separated audio and video signals.

The signal processing unit 120 may convert the decoded audio signal into an audio signal in an outputtable format through a speaker, and convert the decoded video signal into an outputtable video signal through a display by performing signal processing on the decoded video signal such as video scaling, frame rate conversion, etc.

The output unit 130 may output content on which signal processing is performed. In more detail, the output unit 130 may include the speaker that outputs the audio signal on which signal processing is performed and the display that outputs the video signal on which signal processing is performed.

The processor 140 processes overall operations of the broadcasting receiving apparatus 100.

In particular, the processor 140 may analyze the content on which signal processing is performed, more particularly, the audio signal included in the decoded content, extract keywords, generate, autonomously, and output additional information corresponding to a content output scene based on the extracted keywords. That is, the content related to sports, for example, content relaying a sports game may generally include a voice of a commentator who relays a game, and sports information may be generated based on content included in the voice.

In this case, the processor 140 may convert the voice included in the decoded audio signal into text and extract the keywords from the converted text. That is, the processor 140 may recognize the voice through a voice recognition technology, convert the voice into text, and detect the keywords from the converted text.

Thereafter, the processor 140 may extract the keywords from the text in which the voice included in the audio signal is converted. In this case, the processor 140 may detect the keywords using at least one of phonetic-based keyword spotting, large-vocabulary continuous speech recognition (LVCSR)-based keyword spotting, and hybrid keyword spotting.

The processor 140 may extract the keywords from the converted text, reconfigure the extracted keywords, and then autonomously generate additional information based on the reconfigured keywords.

In more detail, the processor 140 may detect characteristics of the extracted keywords and reconfigure the keywords in a preset form applicable to a preset classification model, and then classify the reconfigured keywords according to the preset classification model, and generate the sports information. In this regard, one of existing various classification models such as a Bayesian classification model, a support vector machine (SVM) model, a random forest model, an AdaBoost model, an expectation maximization (EM) model, a hidden markov model (HMM), etc. may be applied as the preset classification model. In this case, the processor 140 may reconfigure the extracted keywords in the preset form applicable to a classification model that is to be applied.

In this case, the processor 140 may output the generated sports information in an OSD form according to a preset event. In this regard, the preset event may be at least one of an information request event of the user and an event in which a scene related to the generated sports information is output.

However, according to circumstances, at least a part of the configurations described above may be performed by an external server (not shown). For example, the broadcasting receiving apparatus 100 may transmit the decoded audio signal to the external server, and the external server may be implemented to perform various operations according to an embodiment and transmit and display finally generated sports information to the broadcasting receiving apparatus 100.

FIG. 2 is a block diagram of a configuration of a broadcasting receiving apparatus 100' according to another exemplary embodiment.

Referring to FIG. 2, the broadcasting receiving apparatus 100' may include the receiving unit 110, the signal processing unit 120, the output unit 130, the processor 140, a storage unit 150, and a user interface unit 160. Detailed descriptions of redundant configurations between FIGS. 1 and 2 are omitted in FIG. 2.

The storage unit 150 stores a reference keyword list. The reference keyword list may be a list in which keywords are classified and listed according to a preset reference. For example, the reference keyword list may be a list in which keywords corresponding to sports item information, team information, player information, stadium information, etc. are previously classified and listed. Although such a reference keyword list may be received from the outside or stored in advance when manufactured, the reference keyword list may be established based on content received in real time.

In this case, the processor 140 may detect keywords based on the reference keyword list stored in the storage unit 150. That is, the processor 140 may detect terms included in the reference keyword list as the keywords.

However, the reference keyword list may not merely include only terms but may include images. For example, photo information of players and various types of tool information (for example, golf clubs, etc.) may be included in the reference keyword list.

In this case, the processor 140 may provide information regarding players included in a screen that is currently reproduced via face recognition on an image included in a video or may provide item information (for example, a golf) via image analysis.

However, although it is described in the present embodiment that the reference keyword list is stored in the storage unit 150, the reference keyword list may be stored in a separate database server (not shown) according to another embodiment. In this case, the processor 140 may access the data server (not shown) to detect the keywords.

The user interface unit 160 may receive a user command. The user interface unit 160 may be implemented in various forms according to an implementation example of the broadcasting receiving apparatus 100'. When the broadcasting receiving apparatus 100' is implemented as a digital TV, although the user interface unit 160 may be implemented as a remote receiving unit, when the broadcasting receiving apparatus 100' is implemented as a touch based terminal such as a smart phone, a tablet, etc., the user interface unit 160 may be implemented as a touch screen.

In particular, the user interface unit 170 may receive a sports information request command. If the sports information request command is received, the processor 140 may provide generated sports information.

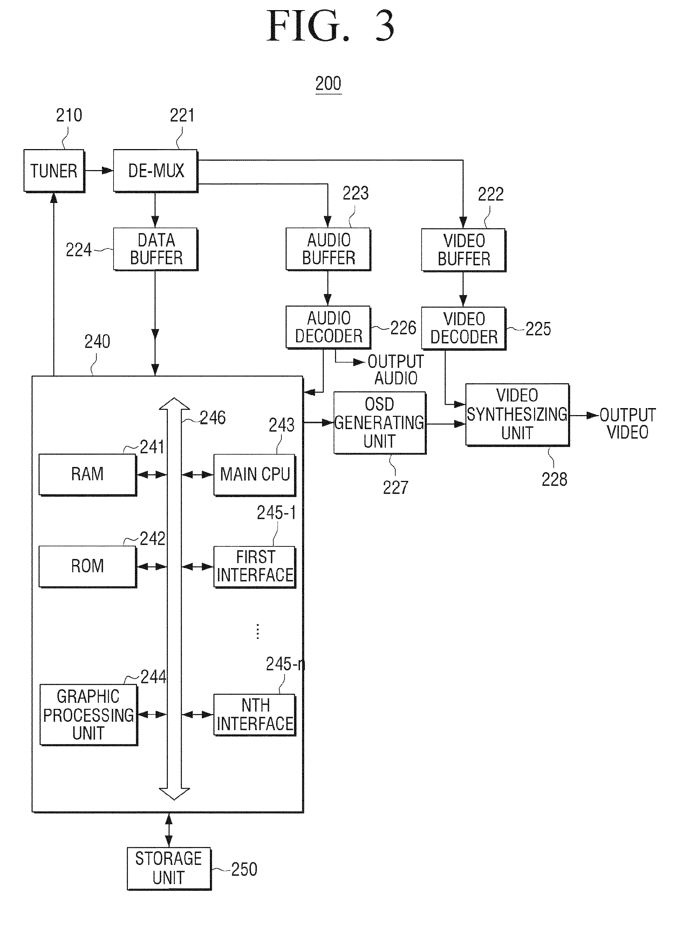

FIG. 3 is a diagram for describing a case where a broadcasting receiving apparatus 200 is implemented as a digital TV according to an exemplary embodiment.

Referring to FIG. 3, the broadcasting receiving apparatus 200 may include a tuner 210, a de-MUX 221, a video buffer 222, an audio buffer 223, a data buffer 224, a video decoder 225, an audio decoder 226, an OSD generating unit 227, a video synthesizing unit 228, a processor 240, and a storage unit 250.

The tuner 210 may select a specific broadcasting channel according to a channel selection command from the processor 240 and receive a digital broadcasting signal.

The de-MUX 221 may parse the digital broadcasting signal received through the tuner 210 as video, audio, and data signals.

The video buffer 222 may buffer and temporarily store the video signal parsed by the de-MUX 221. The audio buffer 223 may buffer and temporarily store the audio signal parsed by the de-MUX 221.

The data buffer 224 may buffer and temporarily store the data signal parsed by the de-MUX 221.

The video decoder 225 may decode the video signal through the video buffer 222 and reconstruct the decoded video signal into a reproducible and outputtable original video signal. The audio decoder 226 may decode the audio signal through the audio buffer 223 and reconstruct the decoded audio signal into a reproducible and outputtable original audio signal.

The processor 240 may analyze the decoded audio signal, extract keywords based on a reference keyword list stored in the storage unit 250, and generate sports information corresponding to a content output scene based on the extracted keywords as described above.

The OSD generating unit 227 may generate an OSD signal corresponding to the generated sports information and provide the ODS signal to the video synthesizing unit 228. In this case, the video synthesizing unit 228 may synthesize and output the decoded video signal and the OSD signal to provide sports information corresponding to a current reproduction scene in an OSD form.

Meanwhile, when contents and an additional data signal such as Program and System Information Protocol (PSIP) are received, the processor 240 may generate sports information corresponding to the extracted keywords in consideration of information included in the received additional data signal. For example, when additional information includes sports item information, the processor 240 may detect keywords based on a reference keyword list corresponding to the sports item information and generate additional information, for example, league information, team information, etc. In this case, an arithmetic operation process for generating the sports information may be further simplified.

Meanwhile, the processor 240 may include a RAM 241, a ROM 242, a main CPU 243, a graphic processing unit 244, first through nth interfaces 245-1∼245-n, and a bus 246.

The RAM 241, the ROM 242, the main CPU 243, the graphic processing unit 244, and the first through nth interfaces 245-1∼245-n may be connected to each other via the bus 246.

The first through nth interfaces 245-1∼245-n may be connected to various elements described above. One of the first through nth interfaces 245-1∼245-n may be a network interface connected to an external apparatus over a network.

The main CPU 243 may access the storage unit 250 to perform booting using an O/S stored in the storage unit 250. The main CPU 243 may perform various operations using various programs, content, data, etc. stored in the storage unit 250.

The ROM 242 may store a set of commands to boot up a system. If a turn-on command is input and power is supplied, the main CPU 243 may copy the OS stored in the storage unit 250 to the RAM 241 according to the commands stored in the ROM 242 and execute the OS to boot up the system. If the system is completely booted up, the main CPU 243 may copy diverse programs stored in the storage unit 250 to the RAM 241, and run the programs copied in the RAM 241 to perform diverse operations.

The graphic processing unit 244 may generate a screen including various objects such as icons, images, text, etc. using a computing unit (not shown) and a rendering unit (not shown). The computing unit (not shown) computes a coordinate value and property values such as a shape, a size, a color, etc. that each object is to be displayed according to a layout of the screen based on a received control command. The rendering unit (not shown) may generate the screen of various layouts including the objects based on the property values computed by the operation unit (not shown).

The storage unit 250 may store an O/S software module and various types of data such as various pieces of multimedia content for driving the broadcasting receiving apparatus 200. In particular, the storage unit 250 may store programs such as a keyword DB, a keyword detection module, a sports information generation module, etc.

Detailed operations of the processor 240 using the programs stored in the storage unit 250 will be described in detail below.

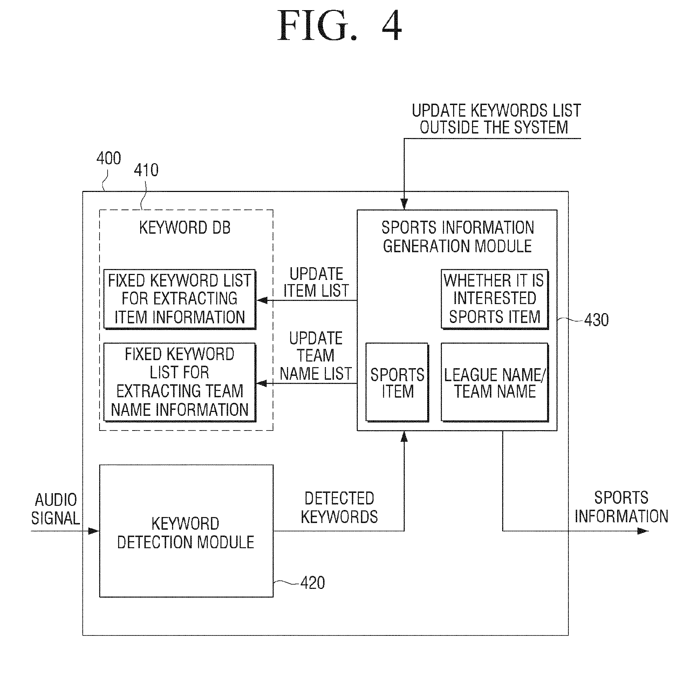

FIGS. 4, 5, 6A, and 6B are diagrams for describing a method of generating sports information according to an exemplary embodiment.

As shown in FIG. 4, if an audio signal, more specifically, text information including text converted according to voice recognition is input, the processor 240 may detect keywords based on a previously stored keyword DB 410 using a keyword detection module 420. In this regard, a reference keyword list stored in the keyword DB 410 may include, for example, a fixed keyword list 411 for extracting item information and a first keyword list 412 for extracting team name information. Meanwhile, the reference keyword list may be updated according to the detected keywords, update information received from the outside, etc.

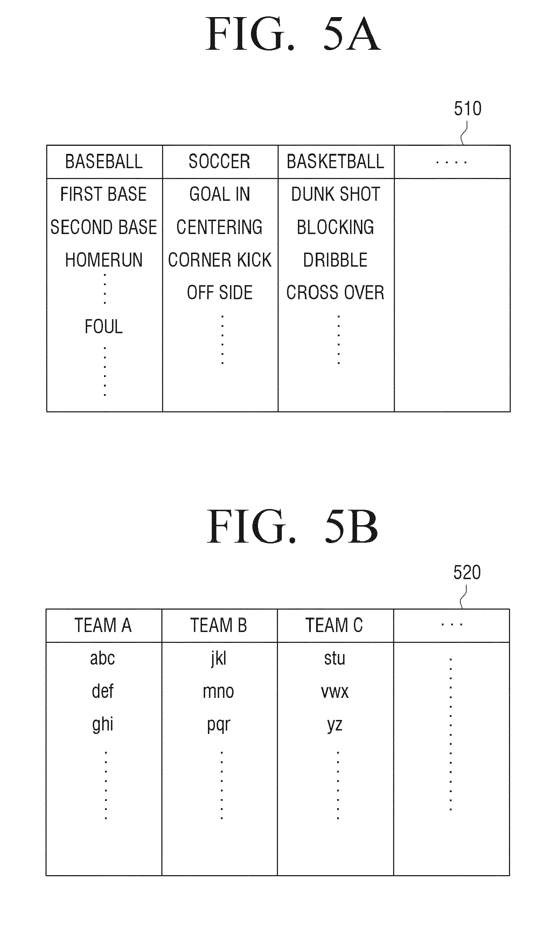

FIGS. 5A and 5B illustrate examples of a keyword list. The fixed keyword list 411 for extracting the item information may have a form 510 including terms classified for each item as shown in FIG. 5A. The first keyword list 412 for extracting or correlating the team name information may have a database form 520 including player names classified for each team as shown in FIG. 5B.

In more detail, the processor 240 may detect the keywords included in the keyword DB 410 using the keyword detection module 420, and a sports information generation module 430 may generate sports information based on the detected keywords. That is, information corresponding to a current output scene may be extracted and provided from predefined database information (for example, a sports item, a league name, a team name, etc.) based on the detected keywords during a specific time section. For example, if a term included in the previously stored keyword list 410 such as "goal in", "centering", "corner kick" etc. is detected from a voice signal, information regarding a sports item "soccer" may be generated based on corresponding information. In this case, when predefined information for generating the sports information is "soccer", a corresponding term may be generated as the sports information.

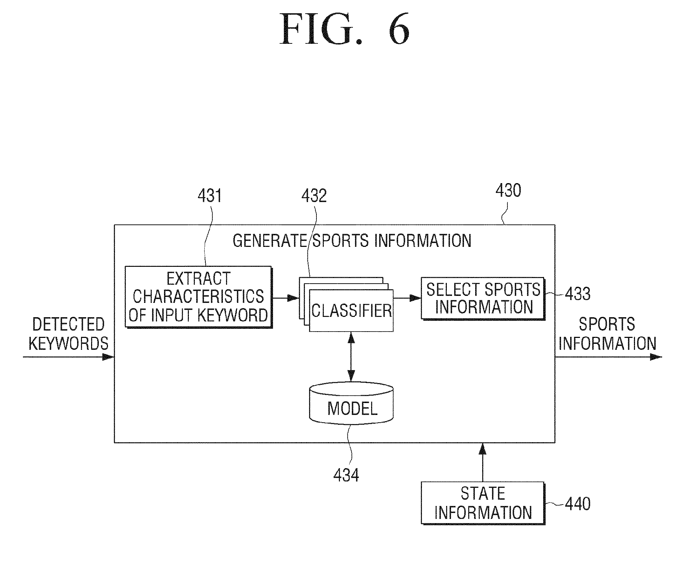

FIG. 6 is a diagram for in detail describing an operation of the sports information generation module 430 of FIG. 4.

Referring to FIG. 6, if the detected keywords are input from the keyword detection module 420, the processor 240 may extract characteristics of the input keywords using the sports information generation module 430 to reconfigure the keywords in a specific form (431). In more detail, the input keywords may be reconfigured in a specific form applicable to a preset classifier 432.

The keywords reconfigured in the preset form may be classified according to a preset classification model 434 through the classifier 432. In this regard, various existing classification models that are statistically learned or prepared using other methods may be applied to the preset classification model 434.

Thereafter, sports information generated based on a classification result of the classifier 432 may be selected (433) and output.

Meanwhile, the processor 240 may generate sports information based on various pieces of state information 440 using the sports information generation module 430. In this regard, the state information 440 may include region information, time information, broadcasting schedule information, etc. For example, the processor 240 may generate appropriate sports information by reflecting a difference between a time of a region where a sports game proceeds and a time of a region where content is currently broadcasted, by reflecting whether broadcasting is live or recorded, or in consideration of a language of the region where the sports game proceeds and a language of the region where content is currently broadcasted, etc. As an example, the generated sports information may be translated into a language corresponding to a broadcasting region and provided.

However, although the item information, the team name information, etc. are simultaneously extracted in the embodiment described above, according to another embodiment, if item information is determined based on the fixed keyword list 411 for extracting the item information, a great amount of information may be utilized at a minimum quantity of DB by replacing the reference keyword list only with a list corresponding to a determined item.

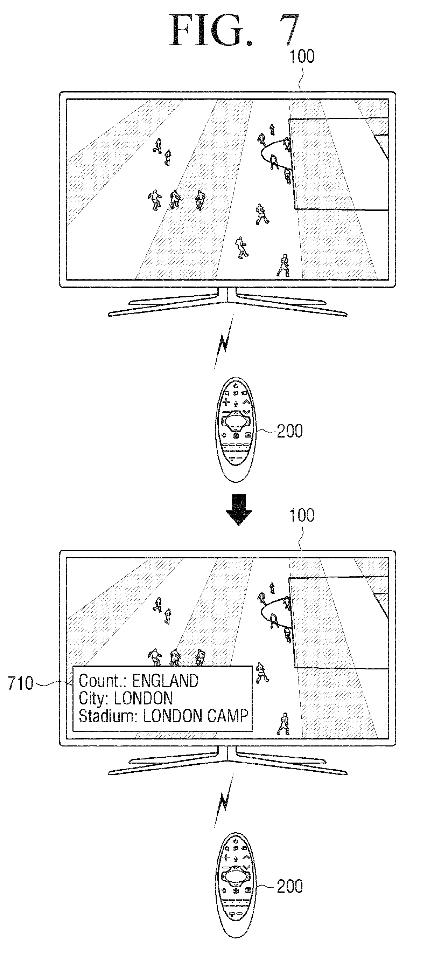

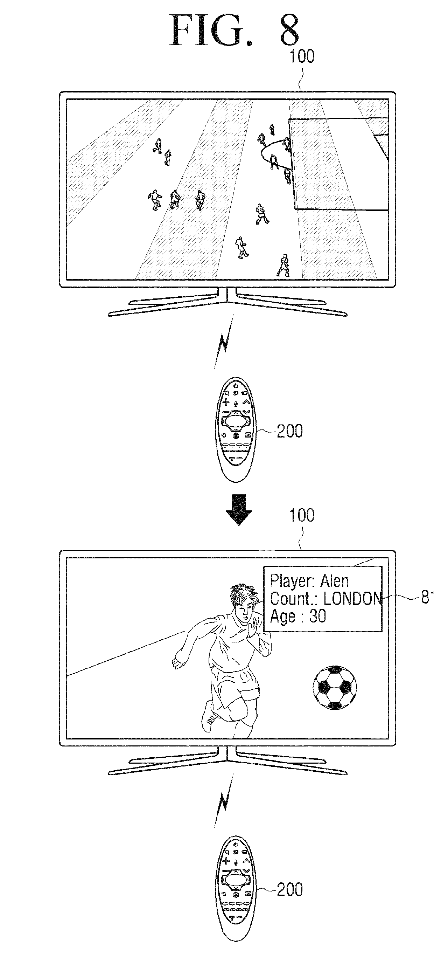

FIGS. 7 and 8 are diagrams for describing a method of outputting generated sports information according to an exemplary embodiment.

As shown in FIG. 7, according to an embodiment, the sports information generated using audio information may be provided according to a user request. In this case, although the provided information is not related to a currently output scene, the provided information may be approximate information of corresponding content.

Alternatively, as shown in FIG. 8, information (for example, player information) corresponding to the currently output scene may be provided according to the user request or automatically.

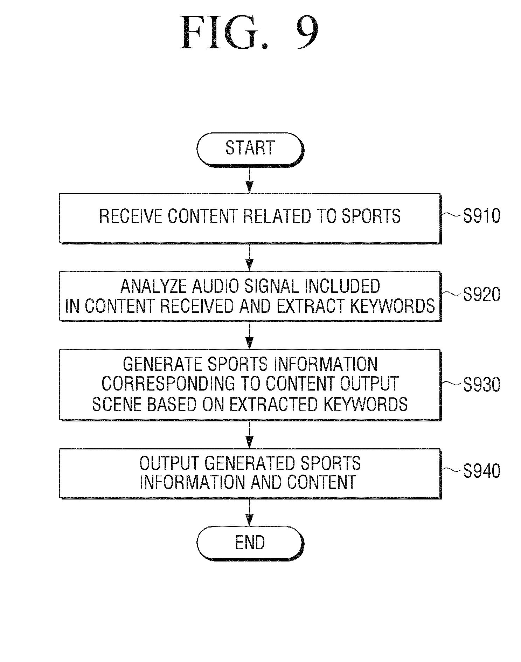

FIG. 9 is a flowchart of a control method that may be performed by a computer of a broadcasting receiving apparatus according to an exemplary embodiment.

According to the control method of the broadcasting receiving apparatus shown in FIG. 9, if content of a genre selected by a user is received (operation S910), signal processing may be performed on the received content (operation S920).

Thereafter, an audio signal included in the content on which signal processing is performed is analyzed to extract keywords, and additional information corresponding to a content output scene may be generated based on the extracted keywords (operation S930).

Thereafter, the generated additional information and the content on which signal processing is performed are simultaneously output (operation S940).

In this regard, the content of a corresponding genre may be content related to sports, and the additional information may be sports information. In this case, the sports information may include at least one of a sports item, a league name, a team name, and a player name.

In this case, in operation S930 of generating the additional information, the keywords may be extracted from the audio signal based on a previously stored reference keyword list.

In this case, in operation S930 of generating the additional information, voice included in the audio signal may be converted into text, and keywords may be extracted from the converted text.

In operation S930 of generating the additional information, the keywords may be extracted from the converted text, characteristics of the extracted keywords may be detected to reconfigure the keywords in a preset form applicable to a preset classification model, and the reconfigured keywords may be classified according to the preset classification model to generate the additional information.

In operation S930 of generating the additional information, when the additional information and the content are received, additional information may be generated based on the extracted keywords and the received additional information.

In operation S940 of outputting the content, the generated additional information may be output in an OSD form according to a preset event. In this regard, the preset event may be at least one of an information request event of a user and an event in which a scene related to the generated additional information is output.

In operation S940 of outputting the content, sports information corresponding to current state information may be selected and output from the generated sports information.

Meanwhile, some of operations described above, for example, an operation of detecting the keywords, may be performed repeatedly or continuously according to circumstances.

As described above, according to one or more exemplary embodiments, although additional information of content is not provided from the outside, a broadcasting receiving apparatus may autonomously generate and provide necessary additional information. A user may confirm accuracy of additional information provided from the outside using the additional information autonomously generated by the broadcasting receiving apparatus. Accordingly, the technical idea may be usefully utilized when the additional information is input as well as is not input from the outside.

Meanwhile, the methods according to one or more exemplary embodiments described above may be implemented only by upgrading software of an existing broadcasting receiving apparatus.

The one or more exemplary embodiments described above may be performed through an embedded server included in a broadcasting receiving apparatus or an external server of the broadcasting receiving apparatus.

A program to sequentially perform the control method by a computer according to the exemplary embodiment may be stored in a non-transitory computer readable medium and be provided.

As an example, a non-transitory computer readable medium storing a program to perform operations on a computer of, if content of a preset genre is received, performing signal processing on the received content, analyzing an audio signal included in the content on which signal processing is performed and extracting keywords, and generating additional information corresponding to a content output scene based on the extracted keywords, may be provided.

The non-transitory computer readable medium is a medium which does not store data temporarily such as a register, cash, and memory but stores data semi-permanently and is readable by devices. More specifically, the aforementioned various applications or programs may be stored in the non-transitory computer readable media such as compact disks (CDs), digital video disks (DVDs), hard disks, Blu-ray disks, universal serial buses (USBs), memory cards, and read-only memory (ROM) and be provided.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Although a few embodiments have been shown and described, it would be appreciated by those skilled in the art that changes may be made in these embodiments without departing from the invention, the scope of which is defined in the claims.

## Claims

1. A broadcasting receiving apparatus, comprising:
a receiving unit configured to receive content of a genre selected by a user as received content;
a signal processing unit configured to perform signal processing on the received content;
an output unit configured to output the received content on which signal processing is performed; and
a processor configured to analyze an audio signal included in the received content on which signal processing is performed, extract keywords as extracted keywords, generate additional information corresponding to a content output scene based on the extracted keywords, and simultaneously output the additional information and the received content on which signal processing is performed.

2. The broadcasting receiving apparatus as claimed in claim 1, further comprising: a storage unit configured to store a reference keyword list in which the keywords are classified and listed according to a preset standard,
wherein the processor extracts the keywords from the audio signal based on the reference keyword list.

3. The broadcasting receiving apparatus as claimed in claim 1 or 2, wherein the processor converts voice included in the audio signal into text as converted text and extracts the keywords from the converted text.

4. The broadcasting receiving apparatus as claimed in claim 3, wherein the processor extracts the keywords from the converted text, reconfigures the extracted keywords as reconfigured keywords, and autonomously generates the additional information based on the reconfigured keywords.

5. The broadcasting receiving apparatus as claimed in anyone of claim 1 to 4, wherein the processor controls the additional information generated to be output in an OSD (On Screen Display) form according to a preset event.

6. The broadcasting receiving apparatus as claimed in claim 5, wherein the preset event is at least one of an information request event of a user and a scene event in which a scene related to the generated additional information is output.

7. The broadcasting receiving apparatus as claimed in anyone of claim 1 to 6, wherein the processor selects and outputs sports information corresponding to current state information from among the additional information generated.

8. The broadcasting receiving apparatus as claimed in anyone of claim 1 to 7, wherein, when the content and the additional information are simultaneously received, the processor generates the additional information based on the extracted keywords and the additional information received.

9. The broadcasting receiving apparatus as claimed in anyone of claim 1 to 8, wherein the content of the genre is content related to sports, and
wherein the additional information is sports information.

10. The broadcasting receiving apparatus as claimed in claim 9, wherein the sports information comprises at least one of a sports item, a league name, a team name, and a player name.

11. A control method of a broadcasting receiving apparatus, the control method comprising:
performing, when content of a genre selected by a user is received as received content, signal processing on the received content;
analyzing an audio signal included in the received content on which signal processing is performed, extracting keywords as extracted keywords, and autonomously generating additional information corresponding to a content output scene based on the extracted keywords; and
simultaneously outputting the additional information and the received content on which signal processing is performed.

12. The control method as claimed in claim 11, wherein the generating of the additional information comprises: extracting the keywords from the audio signal based on a reference keyword list in which the keywords are classified and listed according to a preset standard.

13. The control method as claimed in claim 12, wherein the generating of the additional information comprises: converting voice included in the audio signal into text as converted text and extracting the keywords from the converted text.

14. The control method as claimed in claim 13, wherein the generating of the additional information comprises: extracting the keywords from the converted text, reconfiguring the extracted keywords as reconfigured keywords, and then autonomously generating the additional information based on the reconfigured keywords.

15. The control method as claimed in claim 13 or 14, wherein the outputting comprises: outputting the additional information generated in an OSD (on Screen Display) form according to a preset event.
